(19) **Europäisches Patentamt**
**European Patent Office**
**Office européen des brevets**

(11) **EP 4 773 660 A1**

(12) **EUROPEAN PATENT APPLICATION**
published in accordance with Art. 153(4) EPC

(43) Date of publication:
**08.07.2026 Bulletin 2026/28**

(21) Application number: **24877408.5**

(22) Date of filing: **04.09.2024**

(51) International Patent Classification (IPC):
**H04W 24/08** (2009.01)  **H04W 64/00** (2009.01)
**H04W 84/06** (2009.01)

(52) Cooperative Patent Classification (CPC):
**H04W 24/08; H04W 64/00; H04W 84/06**

(86) International application number:
**PCT/KR2024/013276**

(87) International publication number:
**WO 2025/079869 (17.04.2025 Gazette 2025/16)**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**GE KH MA MD TN**

(30) Priority: **11.10.2023 KR 20230135090**

(71) Applicant: **Samsung Electronics Co., Ltd.
Suwon-si, Gyeonggi-do 16677 (KR)**

(72) Inventors:
• **KIM, Sangbum**
  **Suwon-si, Gyeonggi-do 16677 (KR)**
• **KIM, Daegyun**
  **Suwon-si, Gyeonggi-do 16677 (KR)**
• **SUN, Weiping**
  **Suwon-si, Gyeonggi-do 16677 (KR)**
• **JEONG, Seungbeom**
  **Suwon-si, Gyeonggi-do 16677 (KR)**

(74) Representative: **HGF
HGF Limited
4th Floor, 1 City Square
Leeds LS1 2ES (GB)**

(54) **METHOD AND APPARATUS FOR PERFORMING CELL MEASUREMENT OPERATION FOR AERIAL UE IN NEXT-GENERATION MOBILE COMMUNICATION SYSTEM**

(57)   The present disclosure relates to a 5G or 6G communication system for supporting a higher data transmission rate, and relates to operations of a user equipment (UE) and a base station in a mobile communication system. More specifically, the present disclosure relates to a method and an apparatus for performing a cell measurement operation for an aerial UE in a next-generation mobile communication system.

FIG. 13

```
          UE operation

     Report UE capability                    ~1305

  Receive configuration of measurement relaxation
     through system information               ~1310
         or dedicated signaling

  Based on altitude (or flight path) of UE,
     apply measurement relaxation            ~1315
     parameters corresponding thereto

     Perform relaxed measurement             ~1320
```

EP 4 773 660 A1

**Description**

**[Technical Field]**

The disclosure relates to operations of a terminal and a base station in a mobile communication system. More specifically, the disclosure relates to a method and a device for performing a cell measurement operation for an aerial UE in a next-generation mobile communication system.

**[Background Art]**

5G mobile communication technologies define broad frequency bands to enable high transmission rates and new services, and can be implemented not only in "Sub 6GHz" bands such as 3.5GHz, but also in "Above 6GHz" bands referred to as mmWave including 28GHz and 39GHz. In addition, it has been considered to implement 6G mobile communication technologies (referred to as Beyond 5G systems) in terahertz bands (e.g., 95GHz to 3THz bands) in order to accomplish transmission rates fifty times faster than 5G mobile communication technologies and ultra-low latencies one-tenth of 5G mobile communication technologies.

In the initial stage of 5G mobile communication technologies, in order to support services and to satisfy performance requirements in connection with enhanced Mobile BroadBand (eMBB), Ultra Reliable & Low Latency Communications (URLLC), and massive Machine-Type Communications (mMTC), there has been ongoing standardization regarding beamforming and massive MIMO for alleviating radio-wave path loss and increasing radio-wave transmission distances in mmWave, numerology (for example, operating multiple subcarrier spacings) for efficiently utilizing mmWave resources and dynamic operation of slot formats, initial access technologies for supporting multi-beam transmission and broadbands, definition and operation of BWP (BandWidth Part), new channel coding methods such as a LDPC (Low Density Parity Check) code for large-capacity data transmission and a polar code for highly reliable transmission of control information, L2 preprocessing, and network slicing for providing a dedicated network customized to a specific service.

Currently, there are ongoing discussions regarding improvement and performance enhancement of initial 5G mobile communication technologies in view of services to be supported by 5G mobile communication technologies, and there has been physical layer standardization regarding technologies such as Vehicle-to-everything (V2X) for aiding driving determination by autonomous vehicles based on information regarding positions and states of vehicles transmitted by the vehicles and for enhancing user convenience, New Radio Unlicensed (NR-U) aimed at system operations conforming to various regulation-related requirements in unlicensed bands, NR UE Power Saving, Non-Terrestrial Network (NTN) which is UE-satellite direct communication for securing coverage in an area in which communication with terrestrial networks is unavailable, and positioning.

Moreover, there has been ongoing standardization in wireless interface architecture/protocol fields regarding technologies such as Industrial Internet of Things (IIoT) for supporting new services through interworking and convergence with other industries, IAB (Integrated Access and Backhaul) for providing a node for network service area expansion by supporting a wireless backhaul link and an access link in an integrated manner, mobility enhancement including conditional handover and DAPS (Dual Active Protocol Stack) handover, and two-step random access for simplifying random access procedures (2-step RACH for NR). There also has been ongoing standardization in system architecture/service fields regarding a 5G baseline architecture (for example, service based architecture or service based interface) for combining Network Functions Virtualization (NFV) and Software-Defined Networking (SDN) technologies, and Mobile Edge Computing (MEC) for receiving services based on UE positions.

If such 5G mobile communication systems are commercialized, connected devices that have been exponentially increasing will be connected to communication networks, and it is accordingly expected that enhanced functions and performances of 5G mobile communication systems and integrated operations of connected devices will be necessary. To this end, new research is scheduled in connection with eXtended Reality (XR) for efficiently supporting Augmented Reality (AR), Virtual Reality (VR), Mixed Reality (MR), etc., 5G performance improvement and complexity reduction by utilizing Artificial Intelligence (AI) and Machine Learning (ML), AI service support, metaverse service support, and drone communication.

Furthermore, such development of 5G mobile communication systems will serve as a basis for developing not only new waveforms for securing coverage in terahertz bands of 6G mobile communication technologies, Full Dimensional MIMO (FD-MIMO), multi-antenna transmission technologies such as array antennas and large-scale antennas, metamaterial-based lenses and antennas for improving coverage of terahertz band signals, high-dimensional space multiplexing technology using Orbital Angular Momentum (OAM), and Reconfigurable Intelligent Surface (RIS), but also full-duplex technology for increasing frequency efficiency of 6G mobile communication technologies and improving system networks, AI-based communication technology for implementing system optimization by utilizing satellites and AI (Artificial Intelligence) from the design stage and internalizing end-to-end AI support functions, and next-generation distributed computing technology for implementing services at levels of complexity exceeding the limit of UE operation capability by utilizing ultra-high-performance communication and computing resources.

**[Disclosure of Invention]**

**[Technical Problem]**

Based on the above-described discussions, the disclosure proposes a method and an apparatus device for performing a cell measurement operation in a wireless communication system.

The technical subjects pursued in embodiments of the disclosure may not be limited to the above-mentioned technical subjects, and other technical subjects which are not mentioned herein may be clearly understood from the following description by those skilled in the art to which the disclosure pertains.

**[Solution to Problem]**

To solve the above-described problem, the disclosure proposes a method performed by an aerial terminal in a wireless communication system. More specifically, the method includes: acquiring measurement relaxation configuration information from a base station; determining whether to perform relaxed cell measurement; and when the relaxed cell measurement is determined to be performed, performing the relaxed cell measurement, based on the measurement relaxation configuration information.

To solve the above-described problem, the disclosure proposes a method performed by a base station in a wireless communication system. More specifically, the method includes: receiving, from an aerial terminal, terminal capability information related to relaxed cell measurement; generating measurement relaxation configuration information, based on the terminal capability information; and transmitting the measurement relaxation configuration information to the aerial terminal, wherein the measurement relaxation configuration information is used for the relaxed cell measurement when the relaxed cell measurement is performed.

To solve the above-described problem, the disclosure proposes an aerial terminal in a wireless communication system. The aerial terminal includes a transceiver configured to transmit and receive a signal, and a controller coupled to the transceiver, wherein the controller is configured to acquire measurement relaxation configuration information from a base station, determine whether to perform relaxed cell measurement, and when the relaxed cell measurement is determined to be performed, perform the relaxed cell measurement, based on the measurement relaxation configuration information.

To solve the above-described problem, the disclosure proposes a base station in a wireless communication system. The base station includes a transceiver configured to transmit and receive a signal, and a controller coupled to the transceiver, wherein the controller is configured to receive, from an aerial terminal, terminal capability information related to relaxed cell measurement, generate measurement relaxation configuration information, based on the terminal capability information, and transmit the measurement relaxation configuration information to the aerial terminal, wherein the measurement relaxation configuration information is used for the relaxed cell measurement when the relaxed cell measurement is performed.

**[Advantageous Effects of Invention]**

An embodiment of the disclosure may provide a method and a device for performing a cell measurement operation for an aerial terminal (aerial UE). More specifically, the aerial terminal may perform cell measurement efficiently in consideration of an altitude and a movement speed of the terminal.

Advantageous effects obtainable from the disclosure may not be limited to the above-mentioned effects, and other effects which are not mentioned herein may be clearly understood from the following description by those skilled in the art to which the disclosure pertains.

**[Brief Description of Drawings]**

FIG. 1 illustrates a structure of a next-generation mobile communication system according to an embodiment of the disclosure.

FIG. 2 illustrates a method for adjusting a cell measurement requirement in order to reduce power consumption of a UE according to an embodiment of the disclosure.

FIG. 3 illustrates conditions for adjusting cell measurement requirements in order to reduce power consumption of a UE according to an embodiment of the disclosure.

FIG. 4 illustrates conditions for adjusting cell measurement requirements in order to reduce power consumption of a UE according to an embodiment of the disclosure.

FIG. 5 illustrates an operation for determining whether a UE is in a low-speed movement state according to an embodiment of the disclosure.

FIG. 6 illustrates an operation for determining whether a UE is located at a cell edge according to an embodiment of the disclosure.

FIG. 7 illustrates a radio environment in which an aerial UE operates according to an embodiment of the disclosure.

FIG. 8 illustrates an operation of applying configuration information related to relaxed measurement criterion based on an operating altitude of an aerial UE according to an embodiment of the disclosure.

FIG. 9 illustrates an operation of suspending relaxed measurement based on an operating altitude of an aerial UE according to an embodiment of the disclosure.

FIG. 10 illustrates an operation of performing relaxed measurement based on a movement path of an aerial UE according to an embodiment of the disclosure.

FIG. 11 illustrates an operation of performing relaxed measurement based on a movement path of an aerial UE according to an embodiment of the disclosure.

FIG. 12 is a flowchart illustrating a UE operation for performing relaxed measurement based on an operating altitude of an aerial UE according to an embodiment of the disclosure.

FIG. 13 is a flowchart illustrating a UE operation for performing relaxed measurement based on an operating altitude of an aerial UE according to an embodiment of the disclosure.

FIG. 14 is a flowchart illustrating a base station operation for performing relaxed measurement based on an operating altitude of an aerial UE according to an embodiment of the disclosure.

FIG. 15 is a block diagram illustrating an internal structure of a UE according to an embodiment of the disclosure.

FIG. 16 is a block diagram illustrating an internal structure of a base station according to an embodiment of the disclosure.

### [Mode for the Invention]

In describing the disclosure below, a detailed description of known functions or configurations will be omitted when it is determined that the description may make the subject matter of the disclosure unnecessarily unclear. Hereinafter, embodiments of the disclosure will be described with reference to the accompanying drawings.

Hereinafter, the operation principle of the disclosure will be described in detail in conjunction with the accompanying drawings. In describing the disclosure below, a detailed description of relevant known functions or configurations will be omitted when it is determined that the description may make the subject matter of the disclosure unnecessarily unclear. The terms which will be described below are terms defined in consideration of the functions in the disclosure, and may be different according to users, intentions of the users, or customs. Therefore, the definitions of the terms should be made based on the contents throughout the specification.

In describing the disclosure below, a detailed description of known functions or configurations will be omitted when it is determined that the description may make the subject matter of the disclosure unnecessarily unclear. Hereinafter, embodiments of the disclosure will be described with reference to the accompanying drawings.

In the following description, terms for identifying access nodes, terms referring to network entities, terms referring to messages, terms referring to interfaces between network entities, terms referring to various identification information, and the like are illustratively used for the sake of descriptive convenience. Therefore, the disclosure is not limited by the terms as described below, and other terms referring to subjects having equivalent technical meanings may also be used.

In the following description, a base station is an entity that allocates resources to terminals, and may be at least one of a gNode B, an eNode B, a Node B, a base station (BS), a wireless access unit, a base station controller, and a node on a network. A terminal may include a user equipment (UE), a mobile station (MS), a cellular phone, a smartphone, a computer, or a multimedia system capable of performing a communication function. In the disclosure, a "downlink (DL)" refers to a radio link via which a base station transmits a signal to a terminal, and an "uplink (UL)" refers to a radio link via which a terminal transmits a signal to a base station. Furthermore, in the following description, LTE or LTE-A systems may be described by way of example, but the embodiments of the disclosure may also be applied to other communication systems having similar technical backgrounds or channel types. Examples of such communication systems may include the 5th generation mobile communication technologies (5G, new radio, and NR) developed beyond LTE-A, and in the following description, the "5G" may be the concept that covers the exiting LTE, LTE-A, and other similar services. In addition, based on determinations by those skilled in the art, the disclosure may also be applied to other communication systems through some modifications without significantly departing from the scope of the disclosure. Herein, it will be understood that each block of the flowchart illustrations, and combinations of blocks in the flowchart illustrations, can be implemented by computer program instructions.

These computer program instructions can be provided to a processor of a general-purpose computer, special purpose computer, or other programmable data processing apparatus to produce a machine, such that the instructions, which execute via the processor of the computer or other programmable data processing apparatus, create means for implementing the functions specified in the flowchart block or blocks. These computer program instructions may also be stored in a computer usable or computer-readable memory that can direct a computer or other programmable data processing apparatus to function in a particular manner, such that the instructions stored in the computer usable or computer-readable memory produce an article of manufacture including instruction means that implement the function specified in the flowchart block or blocks. The computer program instructions may also be loaded onto a computer or other programmable data processing apparatus to cause a series of operational steps to be performed on the computer or other programmable apparatus to produce a computer implemented process such that the instructions that execute on the computer or other programmable apparatus provide steps for implementing the functions specified in the flowchart block or blocks.

Furthermore, each block in the flowchart illustrations may represent a module, segment, or portion of code, which includes one or more executable instructions for implementing the specified logical function(s). It should also be noted that in some alternative implementations, the functions noted in the blocks may occur out of the order. For example, two blocks shown in succession may in fact be executed substantially concurrently or the blocks may sometimes be executed in the reverse order, depending upon the functionality involved. As used in embodiments of the disclosure, the term "unit" refers to a software element or a hardware element, such as a field programmable gate array (FPGA) or an application specific integrated circuit (ASIC), and the "unit" may perform certain functions. However, the "unit" does not always have a meaning limited to software or hardware. The "unit" may be constructed either to be stored in an addressable storage medium or to execute one or more processors. Therefore, the "unit" includes, for example, software elements, object-oriented software elements, class elements or task elements, processes, functions, properties, procedures, sub-routines, segments of a program code, drivers, firmware, micro-codes, circuits, data, database, data structures, tables, arrays, and parameters. The elements and functions provided by the "unit" may be either combined into a smaller number of elements, or a "unit", or divided into a larger number of elements, or a "unit". Moreover, the elements and "units" may be implemented to reproduce one or more CPUs within a device or a security multimedia card. Furthermore, the "unit" in embodiments may include one or more processors.

In the following description, terms and names defined in the 3rd generation partnership project long term evolution (3GPP LTE) standards will be used for the sake of descriptive convenience. However, the disclosure is not limited by these terms and names, and may be applied in the same way to systems that conform other standards. In the disclosure, the term "eNB" may be interchangeably used with the term "gNB" for the sake of descriptive convenience. That is, a base station described as "eNB" may refer to "gNB".

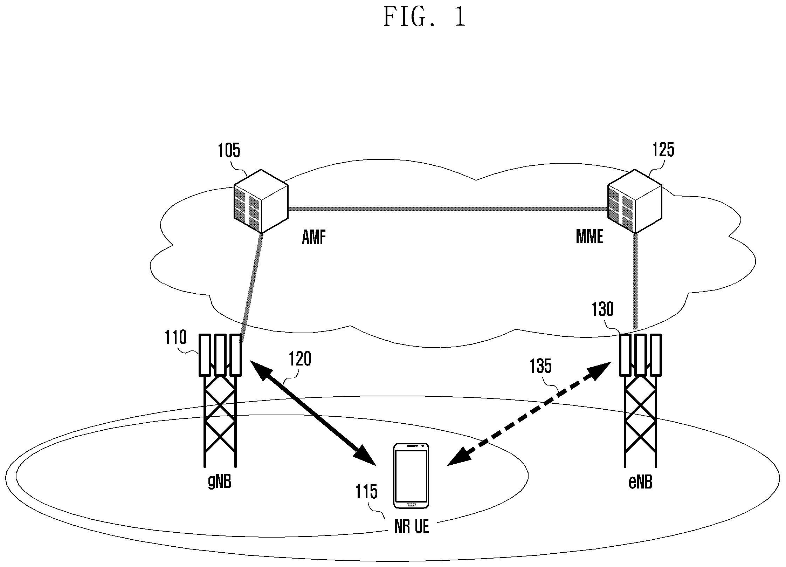

FIG. 1 illustrates a structure of a next-generation mobile communication system according to an embodiment of the disclosure.

Referring to FIG. 1, as illustrated therein, a radio access network of a next-generation mobile communication system (new radio, NR) may include a next-generation base station (new radio Node B, hereinafter gNB) 110 and an access and management function (AMF) (new radio core network) 105. A user terminal (new radio user equipment, hereinafter NR UE or terminal) 115 may access an external network via the gNB 110 and the AMF 105.

In FIG. 1, the gNB may correspond to an evolved Node B (eNB) of a conventional long term evolution (LTE) system. The gNB may be connected to the NR UE through a radio channel and provide outstanding services as compared to a conventional node B (120).

In the next-generation mobile communication system, since all user traffic is serviced through a shared channel, a device that collects state information, such as buffer statuses, available transmit power states, and channel states of UEs, and performs scheduling accordingly is required, and the NR gNB 110 may serve as the device. In general, one gNB may control multiple cells. In order to implement ultrahigh-speed data transfer beyond the current LTE, the next-generation mobile communication system may provide a wider bandwidth than the existing maximum bandwidth, may employ an orthogonal frequency division multiplexing (hereinafter referred to as OFDM) as a radio access technology, and may additionally integrate a beamforming technology therewith. Furthermore, the next-generation mobile communication system may employ an adaptive modulation & coding (hereinafter referred to as AMC) scheme for determining a modulation scheme and a channel coding rate according to a channel state of a UE.

The access and management function (AMF) 105 may perform functions of supporting mobility, configuring a bearer, configuring quality of service (QoS), etc. The AMF is a device responsible for various control functions as well as a mobility management function for a UE, and may be connected to multiple base stations. In addition, the next-generation mobile communication system may interwork with the conventional LTE system, and the AMF may be connected to a mobility management entity (MME) 125 via a network interface. The MME may be connected to the eNB 130 that is an existing base station. A UE supporting LTE-NR dual connectivity may transmit/receive data while maintaining connections to both the gNB and the eNB (135).

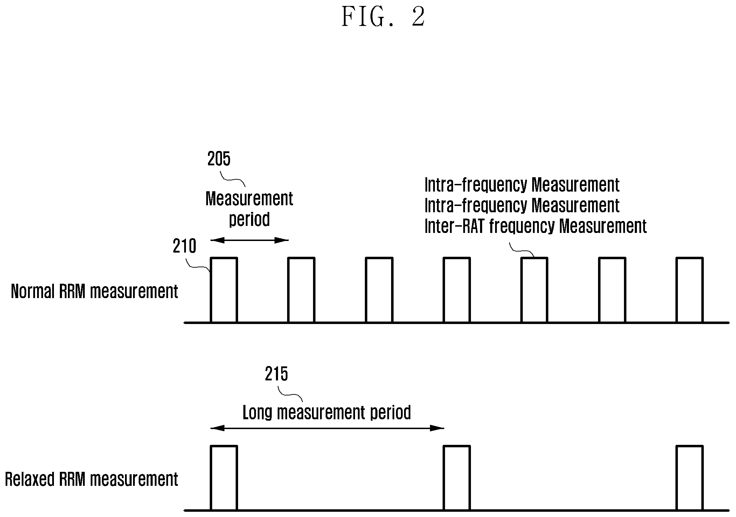

FIG. 2 illustrates a method for adjusting a cell measurement requirement in order to reduce power consumption of a UE according to an embodiment of the disclosure.

In order to support mobility, a UE may measure received signal information of a current serving cell and neighboring cells. Based on a result of the measurement, the UE may perform an operation of changing the current serving cell. That is, based on a cell measurement result, the UE in an idle mode or an inactive mode may perform a cell reselection operation.

The UE in a connected mode may measure a serving cell and neighboring cells, based on predetermined cell measurement configuration information provided by a base station. The UE may report the collected measurement result to the base station periodically or based on an event. The base station may configure, for the UE, a handover operation for changing a serving cell, based on the reported measurement result.

In general, the UE may perform measurement operations for intra-/inter-/inter-RAT frequencies, and may perform the measurement operations for a predetermined time 210 at each predetermined measurement period 205. Measuring at each measurement period has an effect of reducing power consumption of the UE compared to continuous measurement. In particular, as the measurement period 215 increases, the degree of power consumption reduction of the UE may increase. However, increasing the measurement period increases the likelihood that the UE misses a timing for changing a serving cell, and may cause a connection failure or a connection delay of the UE. Therefore, a specific measurement period value is one cell measurement requirement necessary to satisfy a predetermined quality of service, and in a mobile communication standard technology, the value is presented based on a target quality of service.

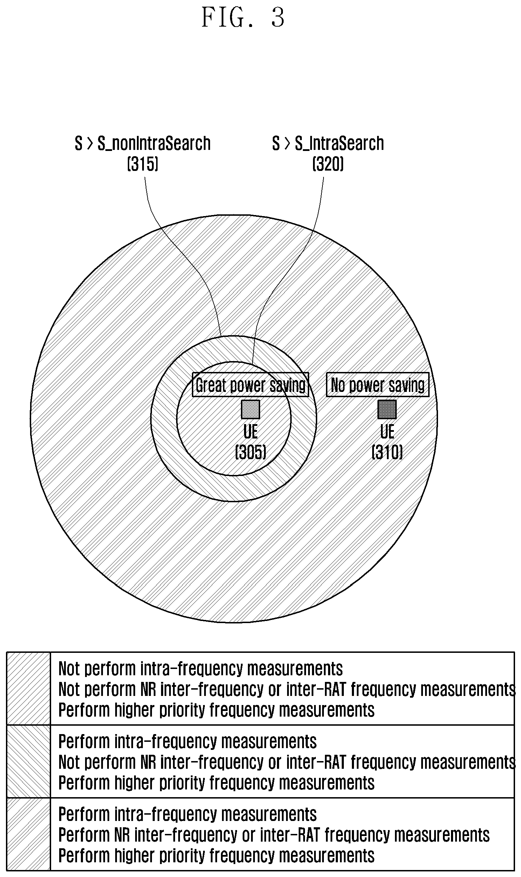

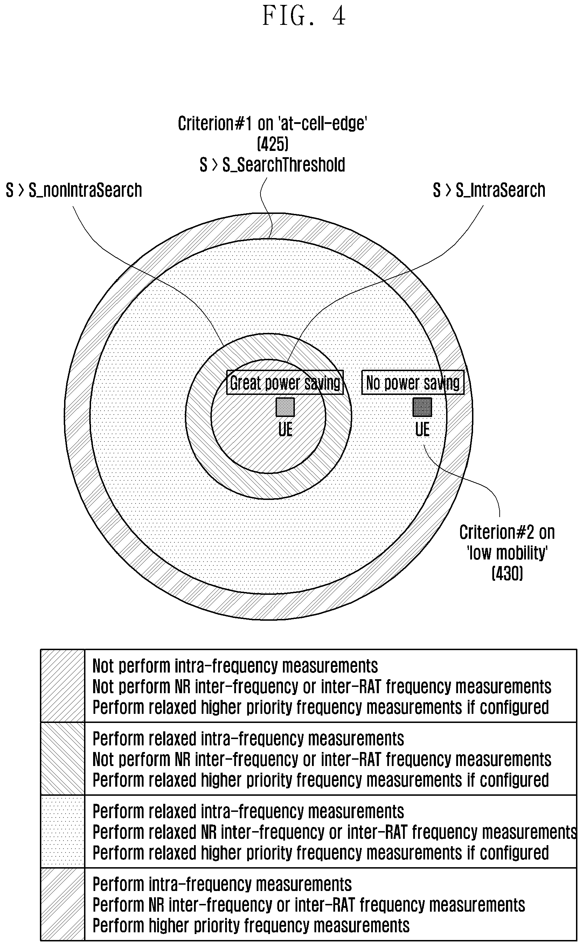

FIGS. 3 and 4 illustrate conditions for adjusting cell measurement requirements in order to reduce power consumption of a UE according to an embodiment of the disclosure.

The purpose of a UE's measurement operation is to support the UE's mobility. Therefore, if the UE selectively performs the measurement operation in an area where inter-cell movement is likely to occur, and suspends the measurement operation or increases a measurement period (or relaxes a cell measurement requirement) in an area in which inter-cell movement does not occur, the UE may reduce its power consumption.

For example, a long term evolution (LTE) or new radio (NR) mobile communication UE may determine whether reference signal received power (RSRP) and reference signal received quality (RSRQ) values of a serving cell are greater than a predetermined threshold value, and may not perform some of measurement operations for intra-/inter-/inter-RAT frequencies.

For UEs in an idle mode or an inactive mode, a base station may provide S_IntraSearch and S_nonIntraSearch values through system information.

If a received RSRP value of a serving cell is lower than the S_nonIntraSearch value, the UE may perform measurement operations for all preconfigured intra-/inter-/inter-RAT frequencies.

Alternatively, if the received RSRP value of the serving cell is higher than the S_nonIntraSearch value and lower than the S_IntraSearch value, the UE may perform measurement operations for an intra-frequency and a frequency having a higher priority, but may not perform measurement operations for inter-/inter-RAT frequencies.

Alternatively, if the received RSRP value of the serving cell is higher than the S_IntraSearch value, the UE may perform a measurement operation only for a frequency having a higher priority, and may not perform measurement operations for intra-/inter-/inter-RAT frequencies.

For the purpose of load balancing, the base station may provide, through system information, a priority value for each frequency along with frequency information to be measured by UEs in an idle mode or an inactive mode. A frequency having a higher priority may refer to a frequency having a priority value higher than that of a frequency to which the serving cell belongs.

In this manner, the UE determines whether the UE is located at a cell center or a cell edge, based on a received signal strength of the serving cell, and if the UE is not located at a cell edge where inter-cell movement may be required, the UE does not perform a predetermined cell measurement operation.

In Rel-16 NR mobile communication, measurement relaxation has also been introduced. The term "measurement relaxation" refers to applying relaxed requirements (e.g., applying a longer measurement period) as compared to existing cell measurement requirements (e.g., a required measurement period) in order to reduce power consumption of the UE.

The measurement relaxation may be applied when a predetermined condition is satisfied. The condition may be an "at-cell-edge" condition 425 and a "low mobility" condition 430. Detailed descriptions of the conditions will be provided below.

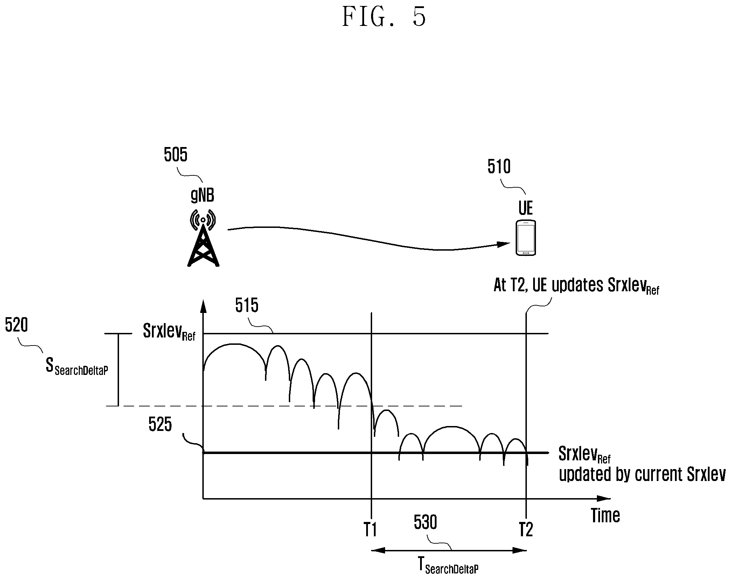

FIG. 5 illustrates an operation for determining whether a UE is in a low-speed movement state according to an embodiment of the disclosure.

In order to ensure mobility support, a UE may use a predetermined cell measurement result. In an idle mode or an inactive mode, the UE may determine whether to perform cell reselection through intra-/inter-/inter-RAT cell measurement operations. The UE in a connected mode collects a preconfigured cell measurement result and reports the same to a base station, so as to enable the base station to determine a handover performance time point.

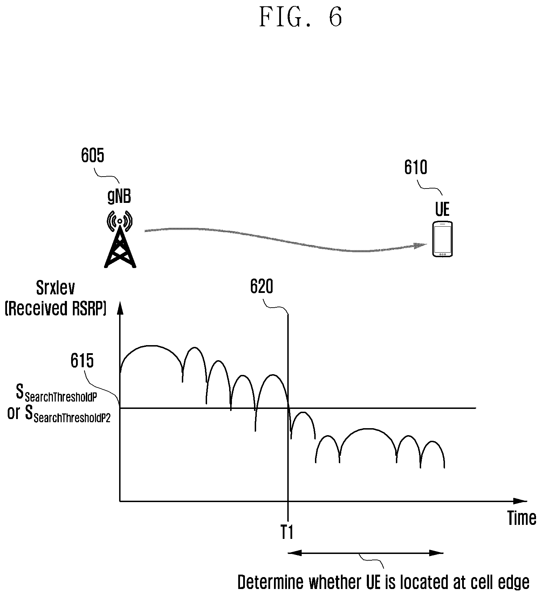

However, the cell measurement operation consumes power of the UE. Therefore, when the UE is not located in a cell edge region requiring cell reselection or handover and the UE is in a low-speed movement state, the UE may temporarily suspend some of intra-/inter-/inter-RAT cell measurement operations, or adjust requirements (e.g., a measurement period) applied to the operations in a direction of (e.g., applying a longer measurement period, etc.) reducing power consumption. This is referred to as relaxed measurement. Criteria for performing the relaxed measurement are described in FIGS. 5 and 6.

In this case, in order to determine whether the UE is in a low-speed movement state, the UE may apply the following equations in [Table 1] from the TS38.304 standard document. The following equations are distinguished according to a general UE or a reduced capability (RedCap) UE.

[Table 1]

---

TS38.304

**5.2.4.9.1  Relaxed measurement criterion for UE with low mobility**

The relaxed measurement criterion for UE with low mobility is fulfilled when:

- $(Srxlev_{Ref} - Srxlev) < S_{SearchDeltaP}$.

Where:

- Srxlev = current Srxlev value of the serving cell (dB).

- $Srxlev_{Ref}$ = reference Srxlev value of the serving cell (dB), set as follows:

  - After selecting or reselecting a new cell, or

  - If $(Srxlev - Srxlev_{Ref}) > 0$, or

  - If the relaxed measurement criterion has not been met for $T_{SearchDeltaP}$:

    - The UE shall set the value of $Srxlev_{Ref}$ to the current Srxlev value of the serving cell.

( omitted )

**5.2.4.9.3  Relaxed measurement criterion for a stationary RedCap UE**

The relaxed measurement criterion for a stationary RedCap UE is fulfilled when:

- $(Srxlev_{RefStationary} - Srxlev) < S_{SearchDeltaP-Stationary}$.

Where:

- Srxlev = current Srxlev value of the serving cell (dB).

- $Srxlev_{RefStationary}$ = reference Srxlev value of the serving cell (dB), set as follows:

  - After selecting or reselecting a new cell, or

  - If $(Srxlev - Srxlev_{RefStationary}) > 0$, or

  - If the relaxed measurement criterion has not been met for $T_{SearchDeltaP-Stationary}$:

    - The UE shall set the value of $Srxlev_{RefStationary}$ to the current Srxlev value of the serving cell.

---

A base station 505 may provide, to a UE 510, configuration values of $S_{SearchDeltaP}$ and $T_{SearchDeltaP}$ through system information.

If the condition, i.e., $(Srxlev_{Ref} - Srxlev) < S_{SearchDeltaP}$ (or $(Srxlev_{RefStationary} - Srxlev) < S_{SearchDeltaP-Stationary}$)) is satisfied for a predetermined time interval $T_{searchDeltaP}$ 530 (or $T_{SearchDeltaP-Stationan}$), the UE 510 considers that the UE is in a low-speed movement state. If the condition is not satisfied, the UE considers that the UE is not in a low-speed movement state.

If an Srxlev value is measured to be lower than a $Srxlev_{Ref}$ 515 value determined according to the above equations by a difference of $S_{SearchDeltaP}$ 520, and thus the condition, i.e., $(Srxlev_{Ref} - Srxlev) < S_{SearchDeltaP}$ (or $(Srxlev_{RefStationary} - Srxlev) < S_{SearchDeltaP-Stationary}$) is not satisfied for the predetermined time interval $T_{SearchDeltaP}$

530 (or $T_{SearchDeltaP\text{-}Stationary}$), the UE 510 configures the $Srxlev_{Ref}$ as a currently measured Srxlev 525 of the serving cell.

The Srxlev refers to a value calculated by the following S-criteria in which a received signal strength is considered. That is,

**Srxlev** = $Q_{rxlevmeas}$ - ($Q_{rxlevmin}$ + $Q_{rxlevminoffset}$)- $P_{compensation}$ - $Qoffset_{temp}$

| Srxlev | Cell selection RX level value (dB) |
|---|---|
| Squal | Cell selection quality value (dB) |
| $Qoffset_{temp}$ | Offset temporarily applied to a cell as specified in TS 38.331 [3] (dB) |
| $Q_{rxlevmeas}$ | Measured cell RX level value (RSRP) |
| $Q_{qualmeas}$ | Measured cell quality value (RSRQ) |
| $Q_{rxlevmin}$ | Minimum required RX level in the cell (dBm). If the UE supports SUL frequency for this cell, Qrxlevmin is obtained from q-RxLevMinSUL, if present, in SIB1, SIB2 and SIB4, additionally, if $Q_{rxlevminoffsetcellSUL}$ is present in SIB3 and SIB4 for the concerned cell, this cell specific offset is added to the corresponding Qrxlevmin to achieve the required minimum RX level in the concerned cell; else Qrxlevmin is obtained from q-RxLevMin in SIB1, SIB2 and SIB4, additionally, if $Q_{rxlevminoffsetcell}$ is present in SIB3 and SIB4 for the concerned cell, this cell specific offset is added to the corresponding Qrxlevmin to achieve the required minimum RX level in the concerned cell. |
| $Q_{qualmin}$ | Minimum required quality level in the cell (dB). Additionally, if $Q_{qualminoffsetcell}$ is signalled for the concerned cell, this cell specific offset is added to achieve the required minimum quality level in the concerned cell. |
| $Q_{rxlevminoffset}$ | Offset to the signalled $Q_{rxlevmin}$ taken into account in the Srxlev evaluation as a result of a periodic search for a higher priority PLMN while camped normally in a VPLMN, as specified in TS 23.122 [9]. |
| $Q_{qualminoffset}$ | Offset to the signalled $Q_{qualmin}$ taken into account in the Squal evaluation as a result of a periodic search for a higher priority PLMN while camped normally in a VPLMN, as specified in TS 23.122 [9]. |
| $P_{compensation}$ | If the UE supports the additionalPmax in the NR-NS-PmaxList, if present, in SIB1, SIB2 and SIB4: $max(P_{EMAX1} - P_{PowerClass}, 0) - (min(P_{EMAX2}, P_{PowerClass}) - min(P_{EMAX1}, P_{PowerClass}))$ (dB); else: $max(P_{EMAX1} - P_{PowerClass}, 0)$ (dB) |
| $P_{EMAX1}, P_{EMAX2}$ | Maximum TX power level of a UE may use when transmitting on the uplink in the cell (dBm) defined as Pmax in TS 38.101 [15]. If UE supports SUL frequency for this cell, $P_{EMAX1}$ and $P_{EMAX2}$ are obtained from the p-Max for SUL in SIB1 and NR-NS-PmaxList for SUL respectively in SIB1, SIB2 and SIB4 as specified in TS 38.331 [3], else $P_{EMAX1}$ and $P_{EMAX2}$ are obtained from the p-Max and NR-NS-PmaxList respectively in SIB1, SIB2 and SIB1 for normal UL as specified in TS 38.331 [3]. |
| $P_{PowerClass}$ | Maximum RF output power of the UE (dBm) according to the UE power class as defined in TS 38.101 1 [15]. |

Similarly, in a radio link monitoring (RLM)/beam failure detection (BFD) function, for the purpose of reducing power consumption of the UE (or UE power saving), the UE may reduce requirements of the function according to a low-speed movement state. To this end, the following equations in [Table 2] are applied from the TS38.331 standard document.

[Table 2]

TS38.331

5.7.13.1    Relaxed measurement criterion for low mobility

The relaxed measurement criterion for UE with low mobility in RRC CONNECTED is fulfilled when:

-   (SS-RSRP$_{Ref}$ – SS-RSRP) < S$_{SearchDeltaP-Connected}$,

Where:

-   SS-RSRP = current L3 RSRP measurement of the SpCell based on SSB (dB).

-   SS-RSRP$_{Ref}$ = reference L3 RSRP measurement of the SpCell based on SSB (dB), set as follows:

    -   After receiving low mobility criterion configuration, or

    -   After MAC of the CG successfully completes a Random Access procedure after applying a *reconfigurationWithSync* in *spCellConfig* of the CG while low mobility criterion is configured, or

    -   If (SS-RSRP – SS-RSRP$_{Ref}$) > 0, or

    -   If the relaxed measurement criterion has not been met for T$_{SearchDeltaP-Connected}$:

        -   The UE shall set the value of SS-RSRP$_{Ref}$ to the current SS-RSRP value of the SpCell.

The base station may provide, to the UE, configuration values of $S_{SearchDeltaP-Connected}$ and $T_{SearchDeltaP-Connected}$ through dedicated signaling. If the condition, i.e., (*SS-RSRP$_{Ref}$* - SS-RSRP) < $S_{SearchDeltaP-Connected}$, is satisfied for a predetermined time interval $T_{SearchDeltaP-Connected}$, the UE considers that the UE is in a low-speed movement state.

If an SS-RSRP value is measured to be lower than a *SS-RSRP$_{Ref}$* value determined according to the above equations by a difference of $S_{SearchDeltaP-Connected}$, and thus the condition, i.e., (*SS-RSRP$_{Ref}$* - SS-RSRP) < $S_{SearchDeltaP-Connected}$ is not satisfied for the predetermined time interval $T_{SearchDeltaP-Connected}$, the UE configures *SS-RSRP$_{Ref}$* as a currently measured SS-RSRP of the serving cell.

Although the embodiments are mainly described with respect to relaxed measurement, the scope of the disclosure is not limited thereto, and the same may be applied to similar operations for evaluating a low-speed state in radio link monitoring (RLM)/beam failure detection (BFD).

FIG. 6 illustrates an operation for determining whether a UE is located at a cell edge according to an embodiment of the disclosure.

In order to ensure support for mobility, a UE may use a predetermined cell measurement result. In an idle mode or an inactive mode, the UE may determine whether to perform cell reselection, through intra-/inter-/inter-RAT cell measurement operations. The UE in a connected mode collects a preconfigured cell measurement result and reports the same to a base station, so as to enable the base station to determine a handover performance time point.

However, the cell measurement operation consumes power of the UE. Therefore, when the UE is not located in a cell edge region requiring cell reselection or handover and the UE is in a low-speed movement state, the UE may temporarily suspend some of intra-/inter-/inter-RAT cell measurement operations, or adjust requirements (e.g., a measurement period) applied to the operations in a direction of (e.g., applying a longer measurement period, etc.) reducing power consumption. This is referred to as relaxed measurement.

In this case, in order to determine whether the UE is in a cell edge region, the UE applies the following equations in [Table 3] from the TS38.304 standard document. The following equations are distinguished according to a general UE or a reduced capability (RedCap) UE.

[Table 3]

---

TS38.304

### 5.2.4.9.2       Relaxed measurement criterion for UE not at cell edge

The relaxed measurement criterion for UE not at cell edge is fulfilled when:

- Srxlev > $S_{SearchThresholdP}$, and,
- Squal > $S_{SearchThresholdQ}$, if $S_{SearchThresholdQ}$ is configured.

Where:

- Srxlev = current Srxlev value of the serving cell (dB).
- Squal = current Squal value of the serving cell (dB).

( omitted )

### 5.2.4.9.4       Relaxed measurement criterion for a stationary RedCap UE not at cell edge

The relaxed measurement criterion for a stationary RedCap UE not at cell edge is fulfilled when:

- the relaxed measurement criterion in clause 5.2.4.9.3 is fulfilled for a period of $T_{SearchDeltaP-Stationary}$,
- Srxlev > $S_{SearchThresholdP2}$, and,
- Squal > $S_{SearchThresholdQ2}$, if $S_{SearchThresholdQ2}$ is configured.

Where:

- Srxlev = current Srxlev value of the serving cell (dB).
- Squal = current Squal value of the serving cell (dB).

---

A base station 605 may provide, to a UE 610, configuration values of $S_{SearchThresholdP}$, $S_{SearchThresholdQ}$, $S_{SearchThresholdP2}$, and $S_{SearchThresholdQ2}$ through system information. The $S_{SearchThresholdP}$ and $S_{SearchThesholdP2}$ are reference signal received quality (RSRP)-based configuration values, and the UE 610 evaluates whether a measured Srxlev value is lower than the configuration value. If reference signal received quality (RSRQ)-based configuration values, $S_{SearchThresholdQ}$ and $S_{SearchThresholdQ2}$, are additionally provided, the UE 610 evaluates whether a measured Squal value is lower than the configuration value.

If the Srxlev value measured by the UE is greater than $S_{SearchThresholdP}$ 615, the UE may consider that the UE is not located at a cell edge and may temporarily suspend some of intra-/inter-/inter-RAT cell measurement operations or adjust requirements applied to the operations in a direction of reducing power consumption. When the Srxlev value measured by the UE is lower than $S_{SearchThresholdP}$ (620), the UE may consider that the UE is located at the cell edge from the time point. If the UE considers that the UE is located at the cell edge, the UE may perform a preconfigured cell measurement operation in an original manner.

In addition to the relaxed measurement, similar UE operations have been standardized. If the measured Srxlev and Squal values are greater than $S_{IntraSearchP}$ and $S_{IntraSearchQ}$, respectively, the UE in the idle mode or the inactive mode does not need to perform an intra-frequency measurement operation. If the measured Srxlev and Squal values are greater $S_{nonIntraSearchP}$ than and $S_{nonIntraSearchQ}$, respectively, the UE may not need to perform an inter-frequency measurement operation (or an inter-RAT frequency having a lower priority) for a frequency having the same or lower priority than the current serving frequency. The parameters (for example, $S_{IntraSearchP}$, $S_{IntraSearchQ}$, $S_{nonIntraSearchP}$, and $S_{nonIntraSearchQ}$) may be provided to the UE by the base station through system information.

The base station may provide an s-MeasureConfig IE to the UE in the connected mode. The IE includes an ssb-RSRP or csi-RSRP configuration value. The UE measures a synchronization signal block (SSB) or a channel state information-reference signal (CSI-RS) transmitted by an SpCell, so as to derive an RSRP, and if the measured RSRP value is greater than the ssb-RSRP or csi-RSRP value, the UE may not need to perform a cell measurement operation.

Although the embodiments are mainly described with respect to relaxed measurement, the scope of the disclosure is not limited thereto and the same may be equally applied to $S_{IntraSearchP}$, $S_{IntraSearchQ}$, $S_{nonIntraSearchP}$, $S_{nonIntraSearchQ}$, and s-Measure mentioned above.

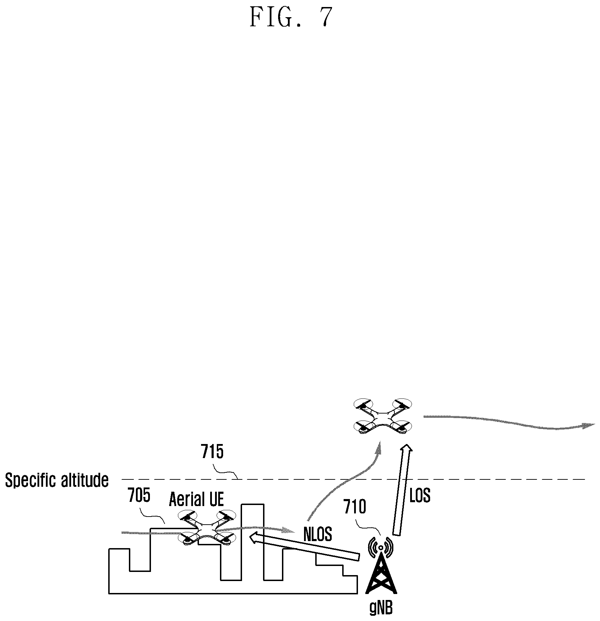

FIG. 7 illustrates a radio environment in which an aerial UE operates according to an embodiment of the disclosure.

An aerial UE refers to a flying UE capable of mobile communication. As a representative example, there is an unmanned aerial vehicle (UAV) having a mobile communication module. Such an aerial UE may generally perform wireless communication with a terrestrial base station, and may transmit and receive necessary data.

Since the aerial UE is able to fly, the aerial UE may move at a low altitude similar to a general UE, or may also move at a high altitude. When the aerial UE moves at the low altitude, the aerial UE is in a non-line-of-sight (NLOS) environment with the base station, and thus signal attenuation per unit distance is large. When the aerial UE moves at the high altitude, the aerial UE is in a line-of-sight (LOS) environment with the base station, and thus signal attenuation per unit distance is smaller compared to the NLOS environment. That is, a received signal strength over the same distance may differ depending on the altitude of the aerial UE.

The aerial UE in flight cannot effectively receive power from the outside. Therefore, for an aerial UE, reducing power consumption is an important issue. In order to reduce power consumption of an aerial UE, the above-described cell measurement operations for reducing power consumption may be very useful for aerial UEs.

The base station may provide, to the UE, configuration information related to a cell measurement operation for low power consumption, through system information or dedicated signaling. The configuration information may include reference signal received power (RSRP)-based threshold values. The UE may compare and evaluate a currently measured RSRP value (received signal strength) with the threshold values, thereby determining the degree of the UE's movement speed or whether the UE is located in a cell edge region. In this case, since the received signal strength may differ depending on the altitude of the aerial UE, a result of the determination may differ depending on the altitude of the aerial UE.

For example, when the aerial UE in flight evaluates the low mobility equation described above, when the aerial UE is at a low altitude, the aerial UE may experience a signal strength change greater than or equal to an S_SearchDeltaP value during T_SearchDeltaP and, in this case, may determine that the aerial UE is not at a low speed. However, even when the aerial UE has moved the same distance at a high altitude, unlike at a low altitude, the aerial UE may experience a signal strength change within an S_SearchDeltaP value during T_SearchDeltaP. In this case, the aerial UE may determine that the UE is in a low-speed state. As described above, this is due to the effect of an NLOS or LOS radio environment depending on the altitude.

Similarly, according to the above-described at-cell-edge equation, a currently measured received RSRP value at a low altitude is lower than preconfigured S_SearchThresholdP, and thus the aerial UE may determine that the aerial UE itself is located in a cell edge area, but at a high altitude, the received RSRP value may be higher than the preconfigured S_SearchThresholdP even though the aerial UE is at the same location, and thus the aerial UE may determine that the aerial UE itself is not located in the cell edge area.

As a result, although the base station has provided the same threshold values, the aerial UE may determine corresponding evaluation results differently depending on its altitude. Such a result may reduce a UE power-saving effect intended by the base station and may also have a negative impact on the mobility performance by causing a delay or failure in a cell change process such as cell reselection or handover.

An embodiment of the disclosure proposes a method for applying cell measurement operations for low power to an aerial UE (UAV). More specifically, the method is characterized in that in consideration of an altitude or a movement path of an aerial UE, separate cell measurement information is provided.

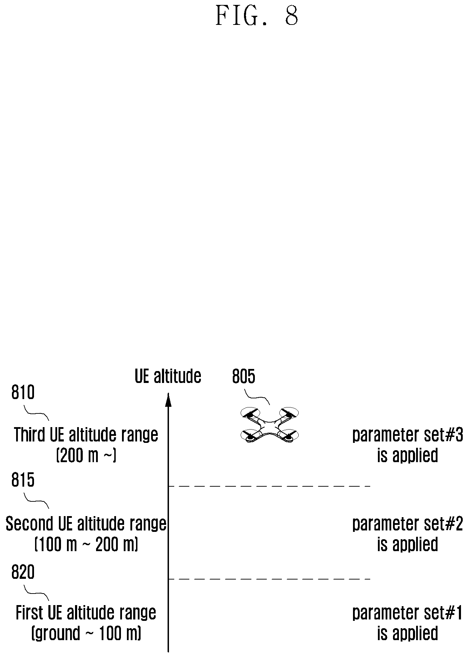

FIG. 8 illustrates an operation of applying configuration information related to relaxed measurement criterion based on an operating altitude of an aerial UE according to an embodiment of the disclosure.

An embodiment of the disclosure provides configuration information related to measurement relaxation applied for each predetermined UE altitude range.

A base station may provide, to a UE, configuration information related to measurement relaxation for each of a plurality of UE altitude ranges by including the configuration information in system information or dedicated signaling. For example, the base station may define a first UE altitude range as from ground level to 100 m (UE height range 1, 820), a second UE altitude range as from 100 m to 200 m (UE height range 2, 815), and a third UE altitude range as 200 m or higher (UE height range 3, 810).

The base station may provide, to the UE, configuration information of $S_{SearchDeltaP}$, $T_{SearchDeltaP}$, $S_{SearchThresholdP}$, $S_{SearchThresholdQ}$ for each altitude range together with the altitude range information, through system information or dedicated signaling. The above-described $S_{SearchDeltaP-Connected}$, $T_{SearchDeltaP-Connected}$, $S_{IntraSearchP}$, $S_{IntraSearchQ}$, $S_{nonIntraSearchP}$, $S_{nonIntraSearchQ}$, and s-Measure may also be provided for each altitude range together with the altitude range information.

A UE having a capability of applying measurement relaxation-related configuration information corresponding to an altitude range may select configuration information to be applied, in consideration of its altitude, and perform a cell measurement operation by applying the selected configuration information.

For example, if an aerial UE 805 is in the first UE altitude range (UE height range 1) 820, the aerial UE 805 may perform a cell measurement operation by applying measurement relaxation configuration information corresponding thereto. (parameter set#1 is applied)

If the aerial UE 805 is in the second UE altitude range (UE height range 2) 815, the aerial UE 805 may perform a cell measurement operation by applying measurement relaxation configuration information corresponding thereto. (parameter set#2 is applied)

If the aerial UE 805 is in the third UE altitude range (UE height range 3) 810, the aerial UE 805 may perform a cell measurement operation by applying measurement relaxation configuration information corresponding thereto. (parameter set#3 is applied)

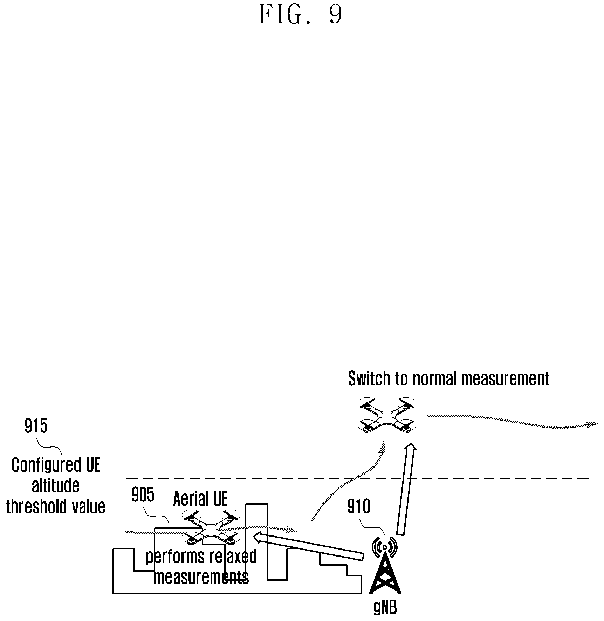

FIG. 9 illustrates an operation of suspending relaxed measurement based on an operating altitude of an aerial UE according to an embodiment of the disclosure.

In general, an aerial UE tends to move at a relatively high speed at a high altitude where there are no obstacles such as buildings. The fact that the UE moves at a high speed may make it inappropriate to apply the relaxed measurement described above. In other words, since the aerial UE moves at a high speed, the aerial UE needs to be always prepared to perform cell reselection or handover to neighboring cells. The preparation for performing cell reselection or handover to the neighboring cells also includes performing a cell measurement operation in accordance with general cell measurement requirements.

Based on the above-described premise, when an aerial UE 905 ascends to or above a specific preconfigured altitude 915, based on an altitude of the aerial UE (910), if the aerial UE 905 suspends application of preconfigured measurement relaxation, it is possible to exclude the application of measurement relaxation at a high altitude where the application of the measurement relaxation is inappropriate, while avoiding control signaling overhead.

The configured altitude value 915 is used to automatically suspend the measurement relaxation operation currently being applied by the aerial UE when the aerial UE increases its altitude to a value equal to or greater than the configured value. The configured altitude value 915 may be provided to the aerial UE by the base station through system information or dedicated RRC signaling. The aerial UE that has suspended the pre-applied measurement relaxation may perform a conventional measurement operation that satisfies the existing cell measurement requirements.

If the aerial UE descends below the preconfigured altitude 915, the aerial UE may apply the preconfigured measurement relaxation again. Alternatively, according to a base station configuration, whether the aerial UE is to apply the preconfigured measurement relaxation when descending below the configured altitude may be determined.

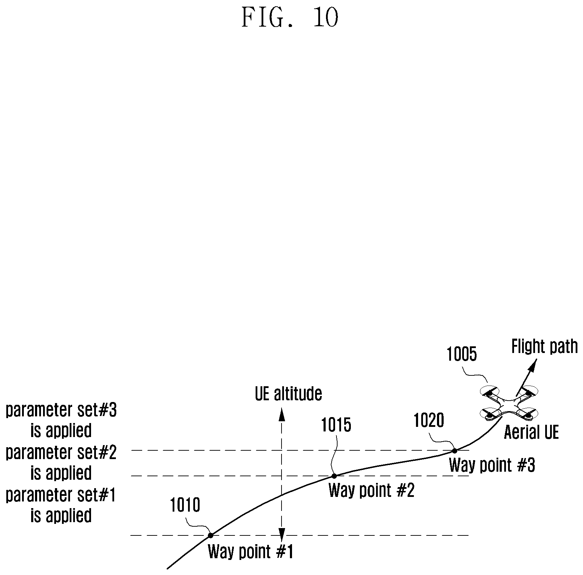

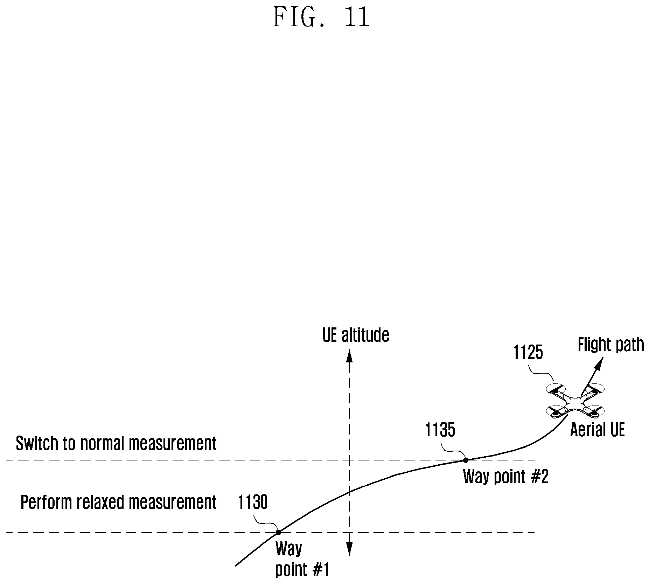

FIGS. 10 and 11 illustrate an operation of performing relaxed measurement based on a movement path of an aerial UE according to an embodiment of the disclosure.

An aerial UE may report its flight path information to a base station by using a predetermined radio resource control (RRC) message. The flight path information may include not only a location of the UE but also altitude information and time information indicating when the aerial UE arrives at a specific way point.

Based on the flight path information, the base station may prepare in advance to smoothly support mobility of the aerial UE. The base station may identify, through (or based on) the flight path information, whether the aerial UE is located in the center of a specific cell or a cell edge area at a given time point. In addition, the base station may recognize an altitude at which the aerial UE is located at a given time point. Therefore, the base station may provide measurement relaxation configuration information applied based on a flight path of the aerial UE in a connected mode.

For example, the base station may define a first flight path range from a first way point 1010 to a second way point 1015, a second flight path range from a second way point 1015 to a third way point 1020, and a third flight path range beyond a third way point 1020. The base station may provide, to the UE, through dedicated signaling, configuration information of $S_{SearchDeltaP}$, $T_{SearchDeltaP}$, $S_{SearchThresholdP}$, and $S_{SearchThresholdQ}$ for each path range together with the flight path range information. The above-described $S_{SearchDeltaP-Connected}$, $T_{SearchDelta-Connected}$, $S_{IntraSearchP}$, $S_{IntraSearchQ}$, $S_{nonIntraSearchP}$, $S_{nonIntraSearchQ}$, and s-Measure may also be provided for each altitude range together with the altitude range information.

A UE having a capability of applying measurement relaxation-related configuration information corresponding to an altitude range may select configuration information to be applied, in consideration of its flight path. The UE may perform a cell measurement operation by applying the selected configuration information.

For example, if an aerial UE 1005 is in the first flight path range, the aerial UE may perform a cell measurement operation by applying measurement relaxation configuration information corresponding thereto. (parameterset#1 is applied)

If the aerial UE 1005 is in the second flight path range, the aerial UE may perform a cell measurement operation by applying measurement relaxation configuration information corresponding thereto. (parameter set#2 is applied)

If the aerial UE 1005 is in the third flight path range, the aerial UE may perform a cell measurement operation by applying measurement relaxation configuration information corresponding thereto. (parameter set#3 is applied)

Similarly, based on a flight path of the aerial UE, if application of preconfigured measurement relaxation is suspended in a specific flight path range, or if the preconfigured measurement relaxation is applied only in a specific flight path range, it is possible to exclude the application of the measurement relaxation at an inappropriate point or at a high altitude while avoiding control signaling overhead.

The inappropriate point may be a cell edge region or the like on a flight path of the UE. In the region, applying measurement relaxation may degrade mobility performance, and thus it is preferable that the aerial UE does not apply measurement relaxation.

The base station may configure, for the UE, whether to apply or suspend preconfigured measurement relaxation only in a specific flight path range. The flight path may be specified as a way point-to-way point, and the aerial UE configured with the flight path range applies or suspends the preconfigured measurement relaxation only within the range.

For example, the base station may configure the aerial UE 1125 to apply measurement relaxation only on a flight path between a first way point 1130 and a second way point 1125. The aerial UE has entered the configured path range may apply preconfigured measurement relaxation. Outside the configured range, the aerial UE may perform a normal cell measurement operation even if the aerial UE stores preconfigured measurement relaxation configuration information.

If an altitude or a movement path of the UE frequently changes near a boundary value of an altitude range or a movement path range of the UE, a so-called ping-pong phenomenon may occur. In this case, the applied configuration information may be frequently changed, thereby increasing UE complexity and causing frequent changes in a cell measurement operation. Therefore, in order to suppress such a ping-pong phenomenon, the UE may apply a predetermined hysteresis value when determining an altitude range or a movement path range.

The hysteresis value may be configured by the base station. For example, it may be assumed that the UE has been provided by the base station with first configuration information for an altitude range of 0 to 100 m, second configuration information for an altitude range of 100 to 200 m, and a hysteresis value of 10 m. In this case, when the UE ascends to an altitude of 100 m or higher, the UE may apply the second configuration information, but in order to apply the first configuration information again while descending, the UE may apply the hysteresis value of 10 m and apply the first configuration information only after descending below 90 m.

Although a case in which the hysteresis value is applied during descent has been considered above, the hysteresis value may also be applied during ascent.

The cell-edge or UE mobility equations are all based on a comparison of a reference signal received power (RSRP) value or a degree of change thereof.

In an embodiment of the disclosure, instead of an RSRP-based scheme, a method for evaluating a cell-edge or UE mobility based on an actual movement speed of the UE or actual distance information between the UE and a base station is proposed. In addition, configuration information related to the new schemes may be provided for each UE altitude range or movement path range.

**[0105]** - Low Mobility criterion considering an actual movement speed of a UE

The UE may implementationally derive its own movement speed. The UE may report UE capability information related to the derivation to a network. The network may provide, to the UE, a predetermined time range value (T_SearchDeltaP) and a movement speed threshold value by using a system information block (SIB) or dedicated signaling. The configuration information may be provided for each altitude range or movement path range of the UE. If, during a predetermined time, T_SearchDeltaP, a change in a movement speed of the UE (compared to a predetermined reference value) is smaller than the movement speed threshold value, the UE considers that the UE is in a low mobility state.

- Low Mobility criterion and cell-edge criterion considering a distance between a UE and a base station

The UE may derive a distance from the base station. The UE may report UE capability information related to the derivation to a network. The network may provide, to the UE, a predetermined time range value (T_SearchDeltaP) and a distance threshold value related to a low mobility criterion by using a SIB or dedicated signaling. The configuration information may be provided for each altitude range or movement path range of the UE. If, during a predetermined time, T_SearchDeltaP, a distance change (compared to a predetermined reference value) between the UE and the base station is smaller than the distance threshold value, the UE considers that the UE is in a low mobility state.

The network may provide a predetermined distance threshold value related to a cell-edge criterion to the UE by using the SIB or dedicated signaling. The configuration information may be provided for each altitude range or movement path range of the UE. If a distance value between the UE and the base station is greater than the distance threshold value, the UE considers that the UE is not in a cell edge state.

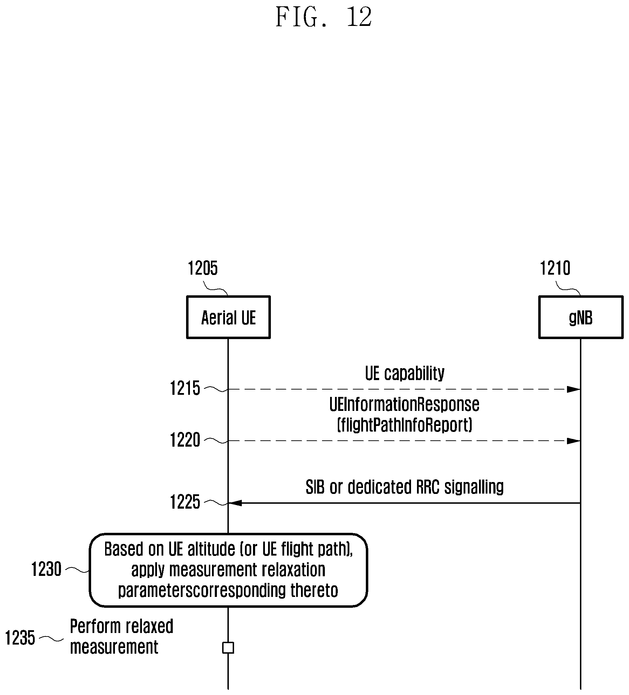

FIG. 12 is a flowchart illustrating a UE operation for performing relaxed measurement based on an operating altitude of an aerial UE according to an embodiment of the disclosure.

In step 1215, an aerial UE 1205 may report its capability information to a base station 1210. (UE capabilities)

The capability information may include an indicator indicating whether the aerial UE itself is able to perform a predefined cell measurement operation such as measurement relaxation, in consideration of an altitude or a movement path.

In step 1220, the aerial UE 1205 may report its flight path information, flightPathInfoReport, to the base station 1210 by using a UE capability predetermined radio resource control (RRC) message. (UEInformationResponse)

In step 1225, the base station 1210 may provide altitude-based or movement path-based measurement relaxation configuration information to the UE (or the aerial UE 1205) by using system information or dedicated RRC signaling. (Alternatively, the same may be transmitted.)

The configuration information which may be provided for each altitude range or movement path range may include $S_{SearchDeltaP}$, $T_{SearchDeltaP}$, $S_{SearchThresholdP}$, $S_{SearchThresholdQ}$, $S_{SearchDeltaP\text{-}Connected}$, $T_{SearchDeltaP\text{-}Connected}$, $S_{IntraSearchP}$, $S_{IntraSearchQ}$, $S_{nonIntraSearchP}$, $S_{nonIntraSearchQ}$, and s-Measure.

In step 1230, the UE having a capability of applying measurement relaxation-related configuration information corresponding to an altitude range or a movement path range may select configuration information to be applied, in consideration of its flight path. (depending on UE height (or UE flight path), apply the measurement relaxation parameters corresponding on it)

In step 1235, the aerial UE 1205 may perform a cell measurement operation. (performing relaxed measurements).

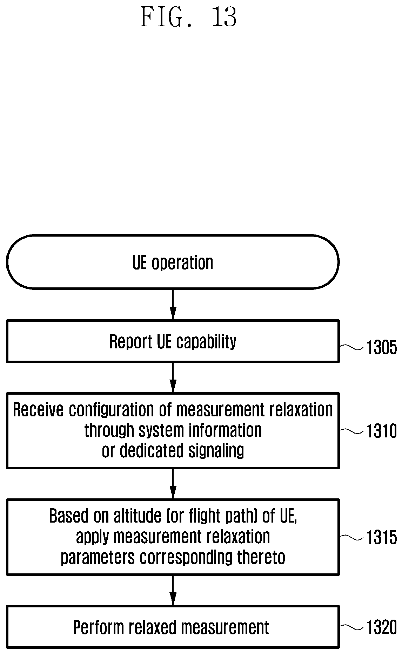

FIG. 13 is a flowchart illustrating a UE operation for performing relaxed measurement based on an operating altitude of an aerial UE according to an embodiment of the disclosure.

In step 1305, a UE may report its capability information to a base station. (Report UE capabilities)

The capability information may include an indicator indicating whether the aerial UE itself is able to perform a predefined cell measurement operation such as measurement relaxation, in consideration of an altitude or a movement path.

In step 1310, the UE may be provided with (or receive) cell measurement configuration information to be applied for each UE altitude range or movement path range, through system information or dedicated signaling transmitted by the base station. (receives the configuration on measurement relaxation, via system information or dedicated signaling)

In step 1315, the UE having a capability of applying measurement relaxation-related configuration information corresponding to an altitude range or a movement path range may select configuration information to be applied, in consideration of its flight path. (depending on UE height (or UE flight path) apply the measurement relaxation parameters corresponding on it)

In step 1320, the UE may perform a cell measurement operation by applying the selected configuration information. If a predetermined condition is satisfied according to the configuration information, the UE may perform relaxed measurement. (performing relaxed measurements)

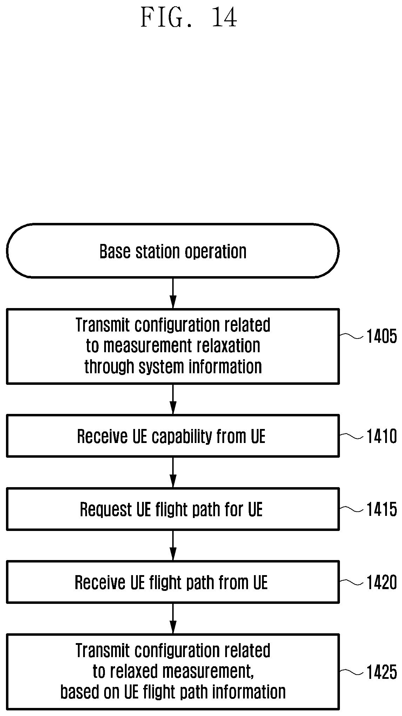

FIG. 14 is a flowchart illustrating a base station operation for performing relaxed measurement based on an operating altitude of an aerial UE according to an embodiment of the disclosure.

In step 1405, a base station may provide, to at least one UE in an idle mode or an inactive mode, relaxed measurement and cell measurement configuration information applied for each UE altitude range or movement path range, through system information. (transmit the configuration on measurement relaxation via system information)

In step 1410, the base station may receive capability information of the UE from the UE. (receives UE capabilities from a UE)

In step 1415, the base station may request flight path information of the UE from the UE in a connected mode state by using a predetermined radio resource control (RRC) message. (request UE flight path information to that UE)

In step 1420, the base station may receive flight path information, flightPathInfoReport, from the UE by using a predetermined RRC message. (receives UE flight path information from that UE)

In step 1425, the base station may provide, to the UE in the connected mode state, relaxed measurement and cell measurement configuration information applied for each UE altitude range or movement path range, based on the flight path information, through dedicated signaling. (transmits the configuration on measurement relaxation, based on the UE flight path information)

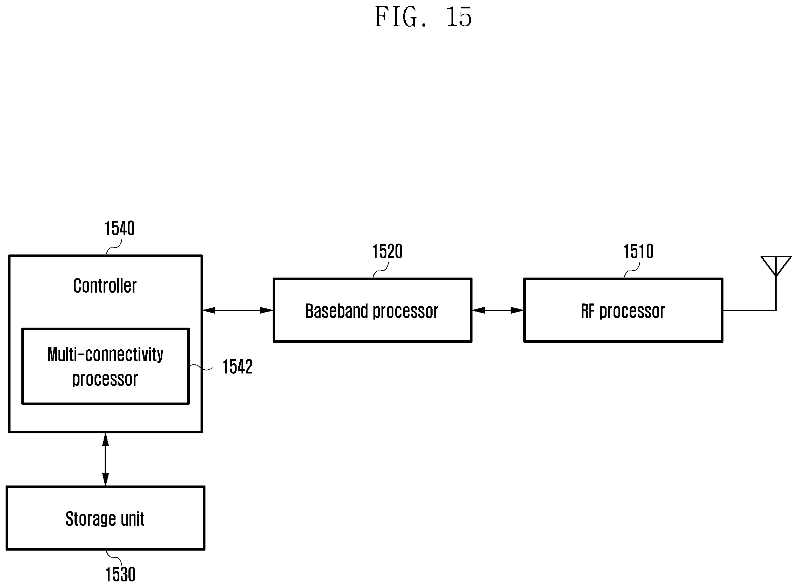

FIG. 15 is a block diagram illustrating an internal structure of a UE according to an embodiment of the disclosure.

Referring to the drawing, the UE may include a radio frequency (RF) processor 1510, a baseband processor 1520, a storage 1530, and a controller 1540.

The RF processor 1510 may perform functions for transmitting/receiving signals through a radio channel, such as signal band conversion and amplification. That is, the RF processor 1510 may up-convert a baseband signal provided from the baseband processor 1520 to an RF band signal, may transmit the same through an antenna, and may down-convert an RF band signal received through the antenna to a baseband signal.

For example, the RF processor 1510 may include a transmission filter, a reception filter, an amplifier, a mixer, an oscillator, a digital-to-analog converter (DAC), an analog-to-digital converter (ADC), and the like. Although only one antenna is illustrated in the drawing, the UE may include multiple antennas.

In addition, the RF processor 1510 may include multiple RF chains. Furthermore, the RF processor 1510 may perform beamforming. For the beamforming, the RF processor 1510 may adjust the phase and magnitude of signals transmitted/received through multiple antennas or antenna elements, respectively. In addition, the RF processor may perform MIMO, and may receive multiple layers when performing an MIMO operation.

The baseband processor 1520 may perform functions of conversion between baseband signals and bitstrings according to the system's physical layer specifications. For example, during data transmission, the baseband processor 1520 may encode and modulate a transmitted bitstring to generate complex symbols. In addition, during data reception, the baseband processor 1520 may demodulate and decode a baseband signal provided from the RF processor 1510 to restore a received bitstring.

For example, when following the orthogonal frequency division multiplexing (OFDM) scheme, during data transmission, the baseband processor 1520 may encode and modulate a transmitted bitstring to generate complex symbols, may map the complex symbols to subcarriers, and may configure OFDM symbols through inverse fast Fourier transform (IFFT) operation and cyclic prefix (CP) insertion.

In addition, during data reception, the baseband processor 1520 may split a baseband signal provided from the RF processor 1510 at the OFDM symbol level, may restore signals mapped to subcarriers through a fast Fourier transform (FFT) operation, and may restore a received bitstring through demodulation and decoding.

The baseband processor 1520 and the RF processor 1510 may transmit and receive signals as described above. Therefore, the baseband processor 1520 and the RF processor 1510 may be referred to as a transmitter, a receiver, a transceiver, or a communication unit. Furthermore, at least one of the baseband processor 1520 and the RF processor 1510 may include multiple communication modules to support multiple different radio access technologies. In addition, at least one of the baseband processor 1520 and the RF processor 1510 may include different communication modules to process signals in different frequency bands.

For example, the different radio access technologies may include a wireless LAN (e.g., IEEE 802.11), a cellular network (e.g., LTE), and the like. In addition, the different frequency bands may include super high frequency (SHF) (e.g., 2NRHz) bands and millimeter wave (mmWave) (e.g., 60GHz) bands.

The storage 1530 may store basic programs, application programs, and data, such as configuration information, for operation of the main base station. Particularly, the storage 1530 may store information regarding a second access node configured to perform wireless communication by using a second radio access technology. In addition, the storage 1530 may provide the stored data at the request of the controller 1540.

The controller 1540 controls the overall operation of the UE. For example, the controller 1540 may transmit-/receive signals through the baseband processor 1520 and the RF processor 1510. In addition, the controller 1540 records data in the storage 1530 and reads the data from the storage 1530. To this end, the controller 1540 may include at least one processor. For example, the controller 1540 may include a communication processor (CP) configured to perform control for communication, and an application processor (AP) configured to control upper layers such as application programs.

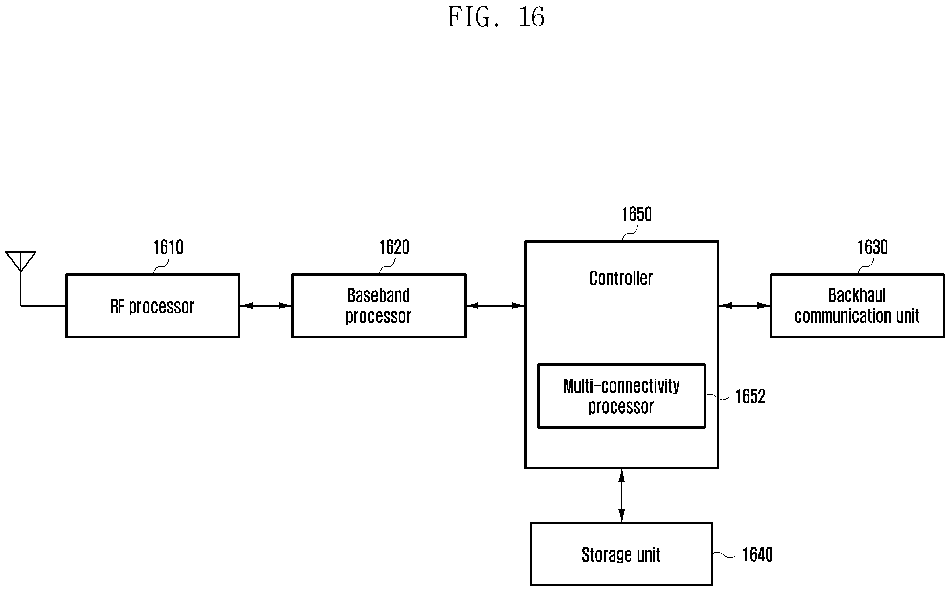

FIG. 16 is a block diagram illustrating an internal structure of a base station according to an embodiment of the disclosure.

As illustrated in the drawing, the base station may include an RF processor 1610, a baseband processor 1620, a backhaul communication unit 1630, a storage 1640, and a controller 1650.

The RF processor 1610 may perform functions for transmitting/receiving signals through a radio channel, such as signal band conversion and amplification. That is, the RF processor 1610 may up-convert a baseband signal provided from the baseband processor 1620 to an RF band signal, may transmit the same through an antenna, and may down-convert an RF band signal received through the antenna to a baseband signal.

For example, the RF processor 1610 may include a transmission filter, a reception filter, an amplifier, a mixer, an oscillator, a digital-to-analog converter (DAC), an analog-to-digital converter (ADC), and the like. Although only one antenna is illustrated in the drawing, the first access node may include multiple antennas.

In addition, the RF processor 1610 may include multiple RF chains. Furthermore, the RF processor 1610 may perform beamforming. For the beamforming, the RF processor 1610 may adjust the phase and magnitude of signals transmitted/received through multiple antennas or antenna elements, respectively. The RF processor may transmit one or more layers to perform a downward MIMO operation.

The baseband processor 1620 may perform functions of conversion between baseband signals and bitstrings according to the physical layer specifications of first radio access technology. For example, during data transmission, the baseband processor 1620 may encode and modulate a transmitted bitstring to generate complex symbols. In addition, during data reception, the baseband processor 1620 may demodulate and decode a baseband signal provided from the RF processor 1610 to restore a received bitstring.

For example, when following the OFDM scheme, during data transmission, the baseband processor 1620 may encode and modulate a transmitted bitstring to generate complex symbols, may map the complex symbols to subcarriers, and may configure OFDM symbols through IFFT operation and CP insertion.

In addition, during data reception, the baseband processor 1620 may split a baseband signal provided from the RF processor 1610 at the OFDM symbol level, may restore signals mapped to subcarriers through FFT operation, and may restore a received bitstring through demodulation and decoding.

The baseband processor 1620 and the RF processor 1610 may transmit and receive signals as described above. Therefore, the baseband processor 1620 and the RF processor 1610 may be referred to as a transmitter, a receiver, a transceiver, or a communication unit.

The backhaul communication unit 1630 may provide an interface for communicating with other nodes in the network. That is, the backhaul communication unit 1630 converts bitstrings transmitted from the main base station to other nodes, for example, an auxiliary base station, a core network, etc., into physical signals, and converts physical signals received from the other nodes into bitstrings.

The storage 1640 may store basic programs, application programs, and data, such as configuration information, for operation of the main base station. Particularly, the storage 1640 may store information regarding a bearer allocated to a connected UE, a measurement result reported from the connected UE, and the like. In addition, the storage 1640 may store information serving as a criterion to determine whether to provide multi-connectivity to a UE or to suspend the same. In addition, the storage 1640 may provide the stored data at the request of the controller 1650.

The controller 1650 controls the overall operation of the main base station. For example, the controller 1650 transmits/receives signals through the baseband processor 1620 and the RF processor 1610 or through the backhaul communication unit 1630. In addition, the controller 1650 records data in the storage 1640 and reads the data from the storage 1640. To this end, the controller 1650 may include at least one processor.

Methods disclosed in the claims or methods according to the embodiments described in the specification of the disclosure may be implemented by hardware, software, or a combination of hardware and software.

When the methods are implemented by software, a computer-readable storage medium for storing one or more programs (software modules) may be provided. The one or more programs stored in the computer-readable storage medium may be configured for execution by one or more processors within the electronic device. The at least one program includes instructions that cause the electronic device to perform the methods according to various embodiments of the disclosure as defined by the appended claims and/or disclosed herein.

These programs (software modules or software) may be stored in non-volatile memories including a random access memory and a flash memory, a read only memory (ROM), an electrically erasable programmable read only memory (EEPROM), a magnetic disc storage device, a compact disc-ROM (CD-ROM), digital versatile discs (DVDs), or other type optical storage devices, or a magnetic cassette. Alternatively, any combination of some or all of them may form a memory in which the program is stored. In addition, a plurality of such memories may be included in the electronic device.

Furthermore, the programs may be stored in an attachable storage device which can access the electronic device through communication networks such as the Internet, Intranet, Local Area Network (LAN), Wide LAN (WLAN), and Storage Area Network (SAN) or a combination thereof. Such a storage device may access the electronic device via an external port. Also, a separate storage device on the communication network may access a portable electronic device.

In the disclosure, the term "computer program product" or "computer readable medium" is used to generally refer to a medium such as a memory, a hard disk installed in a hard disk drive, or a signal. The "computer program product" or "computer readable medium" is an element that is provided to a method for reporting UE capability in a wireless communication system according to the disclosure.

The machine-readable storage medium may be provided in the form of a non-transitory storage medium. Herein, the term "non-transitory storage medium" simply means that the storage medium is a tangible device, and does not include a signal (e.g., an electromagnetic wave), but this term does not differentiate between where data is semi-permanently stored in the storage medium and where the data is temporarily stored in the storage medium. As an example, the "non-transitory storage medium" may include a buffer in which data is temporarily stored

According to an embodiment, methods according to various embodiments of the disclosure may be included and provided in a computer program product. The computer program product may be traded as a product between a seller and a purchaser. The computer program product may be distributed in the form of a machine-readable storage medium (e.g., compact disc read only memory (CD-ROM)), or be distributed (e.g., downloaded or uploaded) online via an application store (e.g., Play Store TM), or between two user devices (e.g., smart phones) directly. If distributed online, at least a part of the computer program product (e.g., a downloadable app) may be temporarily generated or at least temporarily stored in the machine-readable storage medium, such as memory of the manufacturer's server, a server of the application store, or a relay server.

In the above-described detailed embodiments of the disclosure, an element included in the disclosure is expressed in the singular or the plural according to presented detailed embodiments. However, the singular form or plural form is selected appropriately to the presented situation for the convenience of description, and the disclosure is not limited by elements expressed in the singular or the plural. Therefore, either an element expressed in the plural may also include a single element or an element expressed in the singular may also include multiple elements.

Although specific embodiments have been described in the detailed description of the disclosure, it will be apparent that various modifications and changes may be made thereto without departing from the scope of the disclosure. Therefore, the scope of the disclosure should not be defined as being limited to the embodiments set forth herein, but should be defined by the appended claims and equivalents thereof.

**Claims**

1. A method performed by an aerial terminal in a wireless communication system, the method comprising:

   acquiring measurement relaxation configuration information from a base station;
   determining whether to perform relaxed cell measurement; and
   in case of determining to perform the relaxed cell measurement, performing the relaxed cell measurement, based on the measurement relaxation configuration information.

2. The method of claim 1, wherein the measurement relaxation configuration information comprises cell measurement configuration information for each altitude range of at least one terminal.

3. The method of claim 1, wherein, in case that the terminal is below a specific altitude, it is determined to perform the relaxed cell measurement; and
   in case that the terminal is at or above the specific altitude, it is determined to defer performing the relaxed cell measurement is suspended.

4. The method of claim 1, wherein whether to perform the relaxed cell measurement is determined based on a flight path of the terminal.

5. The method of claim 1, wherein whether to perform the relaxed cell measurement is determined based on at least one of a speed of the terminal or an altitude range of the terminal.

6. A method performed by a base station in a wireless communication system, the method comprising:

   receiving, from an aerial terminal, terminal capability information related to relaxed cell measurement;
   generating measurement relaxation configuration information, based on the terminal capability information; and
   transmitting the measurement relaxation configuration information to the aerial terminal,
   wherein the measurement relaxation configuration information is used for the relaxed cell measurement in case that the relaxed cell measurement is performed.

7. The method of claim 6, wherein the measurement relaxation configuration information comprises cell measurement configuration information for each altitude range of at least one terminal.

8. The method of claim 6, wherein performance of the relaxed cell measurement is related to at least one of an altitude of the aerial terminal, a path of the aerial terminal, or a speed of the aerial terminal.

9. An aerial terminal in a wireless communication system, the aerial terminal comprising:

   a transceiver configured to transmit and receive a signal; and
   a controller coupled to the transceiver,
   wherein the controller is configured to:

   acquire measurement relaxation configuration information from a base station;
   determine whether to perform relaxed cell measurement; and
   in case of determining to perform the relaxed cell measurement, perform the relaxed cell measurement, based on the measurement relaxation configuration information.

10. The aerial terminal of claim 9, wherein the measurement relaxation configuration information comprises cell measurement configuration information for each altitude range of at least one terminal.

11. The aerial terminal of claim 9, wherein the controller is configured to:

    in case that the terminal is below a specific altitude, determine to perform the relaxed cell measurement; and
    in case that the terminal is at or above the specific altitude, determine to defer performing the relaxed cell measurement.

12. The method of claim 1, wherein whether to perform the relaxed cell measurement is determined based on at least one of a flight path of the terminal, a speed of the terminal, or an altitude range of the terminal.

13. A base station in a wireless communication system, the base station comprising:

a transceiver configured to transmit and receive a signal; and
a controller coupled to the transceiver,
wherein the controller is configured to:

receive, from an aerial terminal, terminal capability information related to relaxed cell measurement;
generate measurement relaxation configuration information, based on the terminal capability information; and
transmit the measurement relaxation configuration information to the aerial terminal, and
wherein the measurement relaxation configuration information is used for the relaxed cell measurement in case that the relaxed cell measurement is performed.

14. The base station of claim 13, wherein the measurement relaxation configuration information comprises cell measurement configuration information for each altitude range of at least one terminal.

15. The base station of claim 13, wherein performing the relaxed cell measurement is related to at least one of an altitude of the aerial terminal, a path of the aerial terminal, or a speed of the aerial terminal.

FIG. 1

MME 125

AMF 105

130

135

eNB

NR UE 115

120

gNB 110

# FIG. 2

Measurement period
205

210

Intra-frequency Measurement
Intra-frequency Measurement
Inter-RAT frequency Measurement

Normal RRM measurement

215

Long measurement period

Relaxed RRM measurement

# FIG. 3

S > S_nonIntraSearch
[315]

S > S_IntraSearch
[320]

Great power saving

No power saving

UE
[305]

UE
[310]

| | Not perform intra-frequency measurements<br>Not perform NR inter-frequency or inter-RAT frequency measurements<br>Perform higher priority frequency measurements |
|---|---|
| | Perform intra-frequency measurements<br>Not perform NR inter-frequency or inter-RAT frequency measurements<br>Perform higher priority frequency measurements |
| | Perform intra-frequency measurements<br>Perform NR inter-frequency or inter-RAT frequency measurements<br>Perform higher priority frequency measurements |

# FIG. 4

Criterion#1 on 'at-cell-edge'
(425)
S > S_SearchThreshold

S > S_nonIntraSearch

S > S_IntraSearch

Great power saving

No power saving

UE

UE

Criterion#2 on
'low mobility'
(430)

| | |
|---|---|
| | Not perform intra-frequency measurements<br>Not perform NR inter-frequency or inter-RAT frequency measurements<br>Perform relaxed higher priority frequency measurements if configured |
| | Perform relaxed intra-frequency measurements<br>Not perform NR inter-frequency or inter-RAT frequency measurements<br>Perform relaxed higher priority frequency measurements if configured |
| | Perform relaxed intra-frequency measurements<br>Perform relaxed NR inter-frequency or inter-RAT frequency measurements<br>Perform relaxed higher priority frequency measurements if configured |
| | Perform intra-frequency measurements<br>Perform NR inter-frequency or inter-RAT frequency measurements<br>Perform higher priority frequency measurements |

# FIG. 5

EP 4 773 660 A1

FIG. 6

FIG. 7

# FIG. 8

810
Third UE altitude range
(200 m ~)

parameter set#3
is applied

UE altitude        805

815
Second UE altitude range
(100 m ~ 200 m)

parameter set#2
is applied

820
First UE altitude range
(ground ~ 100 m)

parameter set#1
is applied

FIG. 9

Switch to normal measurement

915

Configured UE
altitude
threshold value

905   Aerial UE

performs relaxed
measurements

910

gNB

# FIG. 10

parameter set#3
is applied

parameter set#2
is applied

parameter set#1
is applied

UE altitude

1005

Flight path

1015

1020

Aerial UE

Way point #3

Way point #2

1010

Way point #1

FIG. 11

# FIG. 12

1205 — Aerial UE

1210 — gNB

1215 — UE capability

1220 — UEInformationResponse (flightPathInfoReport)

1225 — SIB or dedicated RRC signalling

1230 — Based on UE altitude (or UE flight path), apply measurement relaxation parameterscorresponding thereto

1235 — Perform relaxed measurement

# FIG. 13

UE operation

Report UE capability ~1305

Receive configuration of measurement relaxation through system information or dedicated signaling ~1310

Based on altitude (or flight path) of UE, apply measurement relaxation parameters corresponding thereto ~1315

Perform relaxed measurement ~1320

# FIG. 14

```
┌─────────────────────────────────────┐
│         Base station operation        │
└─────────────────────────────────────┘
                    │
                    ▼
┌─────────────────────────────────────┐
│     Transmit configuration related    │        1405
│       to measurement relaxation       │
│        through system information     │
└─────────────────────────────────────┘
                    │
                    ▼
┌─────────────────────────────────────┐
│        Receive UE capability from UE   │        1410
└─────────────────────────────────────┘
                    │
                    ▼
┌─────────────────────────────────────┐
│         Request UE flight path for UE  │        1415
└─────────────────────────────────────┘
                    │
                    ▼
┌─────────────────────────────────────┐
│        Receive UE flight path from UE  │        1420
└─────────────────────────────────────┘
                    │
                    ▼
┌─────────────────────────────────────┐
│      Transmit configuration related    │        1425
│          to relaxed measurement,      │
│      based on UE flight path information│
└─────────────────────────────────────┘
```

FIG. 15

EP 4 773 660 A1

# FIG. 16

## INTERNATIONAL SEARCH REPORT

| International application No. |
|---|
| **PCT/KR2024/013276** |

### A. CLASSIFICATION OF SUBJECT MATTER

**H04W 24/08**(2009.01)i; **H04W 64/00**(2009.01)i; **H04W 84/06**(2009.01)i

According to International Patent Classification (IPC) or to both national classification and IPC

### B. FIELDS SEARCHED

Minimum documentation searched (classification system followed by classification symbols)

H04W 24/08(2009.01); H04B 7/185(2006.01); H04W 24/10(2009.01); H04W 36/00(2009.01); H04W 52/28(2009.01); H04W 72/08(2009.01); H04W 84/06(2009.01)

Documentation searched other than minimum documentation to the extent that such documents are included in the fields searched

Korean utility models and applications for utility models: IPC as above
Japanese utility models and applications for utility models: IPC as above

Electronic data base consulted during the international search (name of data base and, where practicable, search terms used)

eKOMPASS (KIPO internal) & keywords: aerial UE, cell, configuration, measurement, report, altitude, elevation, high, low, route, speed

### C. DOCUMENTS CONSIDERED TO BE RELEVANT

| Category* | Citation of document, with indication, where appropriate, of the relevant passages | Relevant to claim No. |
|---|---|---|
| X | US 2020-0187033 A1 (HUAWEI TECHNOLOGIES CO., LTD.) 11 June 2020 (2020-06-11) <br> See paragraphs [0012]-[0126]; claims 1, 4-5 and 9; and figure 8. | 1-15 |
| A | KR 10-2019-0008429 A (LG ELECTRONICS INC.) 23 January 2019 (2019-01-23) <br> See paragraphs [0070]-[0147]; and figures 9-14. | 1-15 |
| A | KR 10-2020-0019737 A (HUAWEI TECHNOLOGIES CO., LTD.) 24 February 2020 (2020-02-24) <br> See paragraphs [0250]-[0363]; and figures 1-8b. | 1-15 |
| A | KR 10-2020-0136027 A (TELEFONAKTIEBOLAGET LM ERICSSON(PUBL)) 04 December 2020 (2020-12-04) <br> See paragraphs [0180]-[0186]; and figure 8. | 1-15 |
| A | US 2022-0330257 A1 (IPCOM GMBH & CO. KG) 13 October 2022 (2022-10-13) <br> See paragraphs [0046]-[0120]; and figures 1-9. | 1-15 |

☐ Further documents are listed in the continuation of Box C.    ☑ See patent family annex.

| * | Special categories of cited documents: |
|---|---|
| "A" | document defining the general state of the art which is not considered to be of particular relevance |
| "D" | document cited by the applicant in the international application |
| "E" | earlier application or patent but published on or after the international filing date |
| "L" | document which may throw doubts on priority claim(s) or which is cited to establish the publication date of another citation or other special reason (as specified) |
| "O" | document referring to an oral disclosure, use, exhibition or other means |
| "P" | document published prior to the international filing date but later than the priority date claimed |

| "T" | later document published after the international filing date or priority date and not in conflict with the application but cited to understand the principle or theory underlying the invention |
|---|---|
| "X" | document of particular relevance; the claimed invention cannot be considered novel or cannot be considered to involve an inventive step when the document is taken alone |
| "Y" | document of particular relevance; the claimed invention cannot be considered to involve an inventive step when the document is combined with one or more other such documents, such combination being obvious to a person skilled in the art |
| "&" | document member of the same patent family |

| Date of the actual completion of the international search | Date of mailing of the international search report |
|---|---|
| **29 November 2024** | **29 November 2024** |

| Name and mailing address of the ISA/KR | Authorized officer |
|---|---|
| **Korean Intellectual Property Office** <br> **Government Complex-Daejeon Building 4, 189 Cheongsa-ro, Seo-gu, Daejeon 35208** | |
| Facsimile No. **+82-42-481-8578** | Telephone No. |

Form PCT/ISA/210 (second sheet) (July 2022)

## INTERNATIONAL SEARCH REPORT
### Information on patent family members

International application No.

**PCT/KR2024/013276**

| Patent document cited in search report | | | Publication date (day/month/year) | Patent family member(s) | | | Publication date (day/month/year) |
|---|---|---|---|---|---|---|---|
| US | 2020-0187033 | A1 | 11 June 2020 | CN | 110915261 | A | 24 March 2020 |
| | | | | CN | 110915261 | B | 18 February 2022 |
| | | | | EP | 3648509 | A1 | 06 May 2020 |
| | | | | EP | 3648509 | A4 | 03 June 2020 |
| | | | | EP | 3648509 | B1 | 06 October 2021 |
| | | | | WO | 2019-028915 | A1 | 14 February 2019 |
| KR | 10-2019-0008429 | A | 23 January 2019 | CN | 110383873 | A | 25 October 2019 |
| | | | | CN | 110383873 | B | 08 November 2022 |
| | | | | EP | 3469827 | A1 | 17 April 2019 |
| | | | | EP | 3469827 | A4 | 20 November 2019 |
| | | | | EP | 3469827 | B1 | 09 June 2021 |
| | | | | JP | 2020-503731 | A | 30 January 2020 |
| | | | | JP | 6776450 | B2 | 28 October 2020 |
| | | | | KR | 10-2096408 | B1 | 02 April 2020 |
| | | | | US | 10856168 | B2 | 01 December 2020 |
| | | | | US | 2019-0166516 | A1 | 30 May 2019 |
| | | | | WO | 2018-194338 | A1 | 25 October 2018 |
| KR | 10-2020-0019737 | A | 24 February 2020 | CN | 109218344 | A | 15 January 2019 |
| | | | | CN | 109218344 | B | 09 November 2021 |
| | | | | EP | 3637732 | A1 | 15 April 2020 |
| | | | | JP | 2020-526135 | A | 27 August 2020 |
| | | | | JP | 6935520 | B2 | 15 September 2021 |
| | | | | KR | 10-2288110 | B1 | 09 August 2021 |
| | | | | US | 2020-0137646 | A1 | 30 April 2020 |
| | | | | WO | 2019-001573 | A1 | 03 January 2019 |
| KR | 10-2020-0136027 | A | 04 December 2020 | CN | 111937449 | A | 13 November 2020 |
| | | | | CN | 111937449 | B | 28 May 2024 |
| | | | | EP | 3777358 | A1 | 17 February 2021 |
| | | | | EP | 3777358 | B1 | 30 August 2023 |
| | | | | JP | 2021-520084 | A | 12 August 2021 |
| | | | | JP | 7209731 | B2 | 20 January 2023 |
| | | | | KR | 10-2023-0082688 | A | 08 June 2023 |
| | | | | US | 11553436 | B2 | 10 January 2023 |
| | | | | US | 2021-0168725 | A1 | 03 June 2021 |
| | | | | WO | 2019-193560 | A1 | 10 October 2019 |
| US | 2022-0330257 | A1 | 13 October 2022 | CN | 110999391 | A | 10 April 2020 |
| | | | | CN | 110999391 | B | 29 April 2022 |
| | | | | EP | 3665944 | A1 | 17 June 2020 |
| | | | | JP | 2020-529757 | A | 08 October 2020 |
| | | | | US | 11405925 | B2 | 02 August 2022 |
| | | | | US | 11910424 | B2 | 20 February 2024 |
| | | | | US | 2020-0252941 | A1 | 06 August 2020 |
| | | | | WO | 2019-030280 | A1 | 14 February 2019 |

Form PCT/ISA/210 (patent family annex) (July 2022)